# EUROPEAN PATENT SPECIFICATION

(11) **EP 1 523 866 B1**
(45) Date of publication and mention of the grant of the patent: **09.01.2008**
(21) Application number: 03738434.4
(22) Date of filing: 13.06.2003
(51) Int. Cl.: H05B 41/282, H05B 41/36, H05B 41/295

(54) **METHOD AND DEVICE FOR IDENTIFYING THE TYPE OF DISCHARGE LAMP**
VERFAHREN UND VORRICHTUNG ZUR IDENTIFIZIERUNG DES TYPS EINER ENTLADUNGSLAMPE
PROCEDE ET DISPOSITIF PERMETTANT D'IDENTIFIER LE TYPE DE LAMPE A DECHARGE

(30) Priority: 15.07.2002 EP 02077842
(43) Date of publication of application: 20.04.2005
(73) Proprietor: Koninklijke Philips Electronics N.V., 5621 BA Eindhoven (NL)
(72) Inventor: VAN EGMOND, Suzanne, NL-5656 AA Eindhoven (NL)
(74) Representative: Bosma, Rudolphus Hubertus Antonius
(86) International application number: PCT/IB2003/002926
(87) International publication number: WO 2004/008815

(56) References cited:
- EP-A- 0 413 991
- EP-A- 0 889 675
- EP-A- 1 209 954
- WO-A-00/07415
- US-A- 4 063 033
- US-B1- 6 414 449
- MORIARTY J K JR ET AL: "Electronic ballast chip set with integral power FETs" INDUSTRY APPLICATIONS CONFERENCE, 1995. THIRTIETH IAS ANNUAL MEETING, IAS '95., CONFERENCE RECORD OF THE 1995 IEEE ORLANDO, FL, USA 8-12 OCT. 1995, NEW YORK, NY, USA,IEEE, US, 8 October 1995 (1995-10-08), pages 2090-2097, XP010193328 ISBN: 0-7803-3008-0
- YUNFEN JI ET AL: "Starting performance of high-frequency electronic ballasts for 4-foot fluorescent lamps" INDUSTRY APPLICATIONS CONFERENCE, 1995. THIRTIETH IAS ANNUAL MEETING, IAS '95., CONFERENCE RECORD OF THE 1995 IEEE ORLANDO, FL, USA 8-12 OCT. 1995, NEW YORK, NY, USA,IEEE, US, 8 October 1995 (1995-10-08), pages 2083-2089, XP010193327 ISBN: 0-7803-3008-0

## Description

The invention relates to a method and a device for identifying the type of discharge lamp, in particular the type of low-pressure gas discharge lamp.

Identification of the type of discharge lamp, particularly the type of lowpressure gas discharge lamp, is utilized in so-termed universal ballasts that are capable of controlling different types of discharge lamps within a broad power range. Said identification is frequently based on different characteristics or parameters of the lamp, such as theI-V characteristics (WO00/07415), the resistance of the incandescent wire (EP0889675), the light output at different currents/voltages (EP 0759686), the starting voltage (EP 0413991) and combinations thereof.

None of these known lamp type identification methods, however, gives a definite answer about the type of lamp that is actually connected to the universal ballast, so that there is a need for yet other methods of identifying the lamp type, which can be used supplementary to the known methods and possibly in combination with said methods to provide a higher degree of certainty that the type of discharge lamp is correctly identified.

Therefore, it is an object of the invention to extend the above-mentioned possibilities of lamp identification.

Applicant has found that by applying an amplitude-modulated control current to a fluorescent lamp at the rising edge of the envelope of the modulated control current, a voltage response of the lamp is obtained the peak value of which exhibits a connection with the length and the diameter of the lamp. By measuring this peak voltage, it is possible to identify the type of lamp used.

The method of identifying the type of discharge lamp in accordance with the invention is characterized in that it comprises the steps of applying a square-wave amplitude-modulated control current to a discharge lamp, detecting the peak value of the lamp voltage at a rising edge of the envelope of the modulated control current, and comparing the detected peak value with previously recorded peak values for different lamp types, and assigning the detected peak value to a lamp type on the basis of said comparison.

The device in accordance with the invention for identifying the lamp type, which comprises means for supplying a control current to a discharge lamp, is characterized by means for square-wave amplitude-modulating the control current to the lamp, peak detection means for detecting the peak voltage across the lamp at a rising edge of the envelope of the amplitude modulated control current, recording means for recording peak voltages associated with lamp types and means for comparing the measured peak voltage with the recorded peak voltages and supplying a lamp type-indicating signal on the basis of said comparison.

These and other aspects of the invention are apparent from and will be elucidated with reference to the embodiment (s) described hereinafter.

In the drawings:
Fig. 1 shows the reaction of the lamp voltage to a step in the envelope of the lamp control current,
Fig. 2 shows a general block diagram of a ballast with a discharge lamp to which the invention can be applied,
Fig. 3 shows a number of measurement-based characteristics of the peak voltage as a function of the modulation frequency for discharge lamps of different diameters,
Fig. 4 shows a number of measurement-based characteristics of the peak voltage as a function of the modulation frequency for lamps of different lengths.

Applicant has carried out experiments in which a preferably square-wave modulation signal having a comparatively lower frequency supplies an amplitude-modulated control current having a comparatively higher frequency to discharge lamps of different lengths/diameters, and the peak voltage occurring across the lamp at a rising edge of the envelope of the amplitude-modulated control current is observed and measured.

Fig. la shows an illustrative reaction of the lamp voltage VI to a positive step in the envelope of the control current 11.

If, as is customary, a control circuit for supplying a control current is used that behaves as a current source, the electric field within the lamp and hence the lamp voltage will adapt itself to the current demand at a specific point in time.

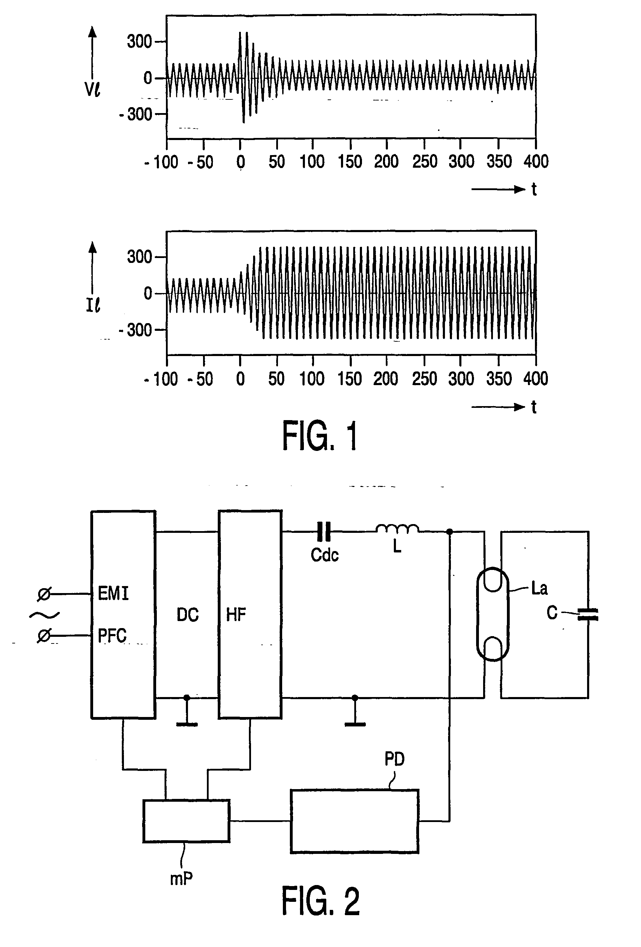

If a square-wave modulation signal with rising edges is employed, then the voltage across the lamp will exhibit dynamic behavior during the rising edge that deviates from the behavior that would be predicted on the basis of the static negative V-I characteristic of the lamp. By increasing the control current of the lamp by one step, the electric field within the lamp will increase, since there are not enough charge carriers to supply the current demanded, so as to produce more charge carriers by ionization. This manifests itself as a peak in the lamp voltage, after which the lamp voltage decreases because the additional production of charge carriers causes the resistance of the charge to decrease. After the peak in the lamp voltage, the discharge will find an equilibrium at a lamp voltage which is lower than that before the step in the control current, which equilibrium is in accordance with the negative V-I characteristic of the discharge (Fig. 1a).

In an experiment, a control voltage having a frequency close to the resonance frequency (40 kHz in a practical case) was supplied to the resonant lamp circuit comprising a self-inductance connected in series with the lamp and a capacitor connected in parallel with the lamp. The lamp electrodes were not heated externally and the lamp was ignited by increasing the amplitude of the control voltage. In accordance with the invention, the control voltage was amplitude-modulated by a square-wave signal having a modulation depth of, for example, 0.5 V peak-peak. The modulation frequency was varied over a range from 200 Hz to 5 kHz. The experiment was repeated for different lamp types: T8 36W, T12 40W, PLL 40W, T5HO 39W, all having approximately the same length of approximately 100 cm and (outside) diameters of approximately 2.5 cm, 3.8 cm, 1.7 cm and 1.6 cm, respectively, and PLC 18W having a smaller length of approximately 34 cm and an (outside) diameter of approximately 1.2 cm (type indication from Philips Lighting).

The peak voltage across the lamp was measured during the positive edge of the modulation signal, i.e. the rising edge of the envelope of the modulated control current supplied to the lamp.

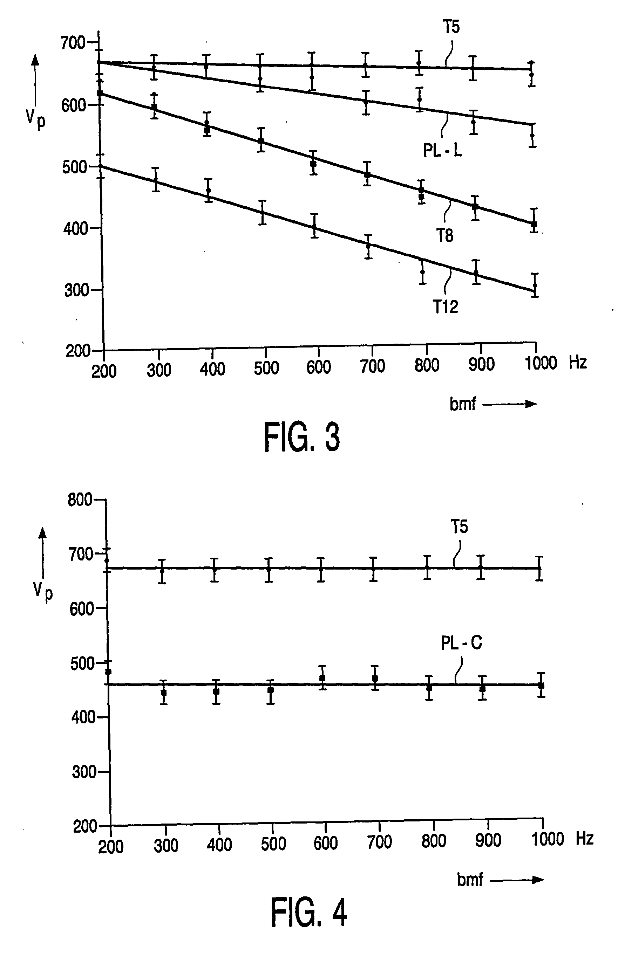

Results of repeated experiments are shown in Figs. 3 and 4.

Upon applying a square-wave modulation, a peak voltage across the lamp was observed from the point where the control current increases. This peak voltage, being a reaction to the step in the control current, decreases linearly with the modulation frequency. Fig. 3 shows the peak voltage Vp as a function of the square-wave modulation frequency bmf for different lamp types having the same length and different diameters. As the Figure shows, the peak height decreases with increasing modulation frequency. The upper characteristic (T5) remains substantially constant but decreases at modulation frequencies higher than the highest modulation frequency shown, i.e., 1000 Hz. (The vertical line segments in Figs. 3, 4 indicate measuring error ranges for measurements on the same lamp type.) A number of lamps of the same lamp type were examined, inter alia, to find out whether ageing of the lamp plays a role; it turned out that this was not the case.

The peak height as a function of the modulation frequency is dependent on the lamp diameter that decreases in the series from P12, P8, PL-L to T5. At a certain modulation frequency the peak height increases as the diameter decreases or decreases as the diameter increases, and the lamp types can be distinguished by the height of the peak voltage.

In Fig. 4, a PL-C 18W and a T5HO 39W were compared. The diameters of these lamps are approximately the same, but the length of the PL-C lamp is approximately half that of the T5 lamp. The Figure shows that the peak height increases with increasing lamp length.

It has been found that lamp stabilization or the operating history of the lamp does not noticeably influence the characteristics shown, and that the effect of the value of the lamp current on the peak height is much smaller than the effect of the modulation frequency or the lamp type.

A possible explanation for the decrease in peak height with increasing lamp diameter (Fig. 3) and modulation frequency is given hereinbelow. The peak value of the electric field that must be generated within the lamp does not only depend on the lamp current but also on the amount of electrons present and the electric field just before the step-like increase of the lamp current. This is the result of course of the step-like decrease which, in the case of square-wave modulation, precedes the step-like current increase. When the step-like current decrease occurs, the discharge has too many charge carriers in comparison with the current demand. As a result the electric field will decrease suddenly to reduce the number of charge carriers produced. Subsequently, the lamp will follow the negative VI characteristic thereof and the lamp voltage will increase to a value exceeding the value before the step-like decrease of the control current. This process, which strives to achieve an equilibrium between electron loss by ambipolar diffusion and the production of electrons by ionization requires some adaptation time. This adaptation time is longer as the diameter of the lamp is larger. If the adaptation time has not yet elapsed when the positive step in the control current occurs, then a small increase of the electric field, immediately after the positive step occurs, will be sufficient to produce the number of charge carriers demanded by the increased control current. This also applies if an increase of the modulation frequency takes place, in which case the time between a negative and a positive step in the control current decreases and hence less adaptation can take place. The increase of the peak voltage with increasing length of the lamp can be attributed to the fact that the peak voltage is calculated from the product of the increase of the electric field and the length of the lamp.

Fig. 2 shows a block diagram of a universal ballast to which the invention can be applied, which ballast is used for a discharge lamp La and comprises a lamp capacitor C, a series self-inductance L and a dc blocking capacitor Cdc, a device for electromagnetic compatibility (EMI) and power factor correction (PFC), which device can be connected to the electricity grid and to which a high-frequency source (HF) for feeding the series-resonance chain L-C is connected via a direct-current connection DC.

A microcontrol unit mP controls the device EMI/PFC embodied so as to be, for example, a voltage-increasing AC/DC converter and the HF source embodied so as to be, for example, an inverting half-bridge converter (inverter), so that during normal operation a square-wave, comparatively high-frequency supply voltage (40 kHz) is supplied to the series-resonance chain L-C at approximately the resonance frequency thereof, so that a corresponding control current is supplied to the lamp. In this case, the series-resonance chain serves as a current source.

In accordance with the invention, a peak voltage detector PD is connected to the lamp La, the indication result of said peak-voltage detector being supplied to the microcontrol unit mP.

The square-wave modulation of the control current of the lamp, which is necessary to carry out the invention, can be obtained in a number of different ways.

### 1. A frequency modulation.

In this case, the HF source supplies a comparatively high-frequency square-wave signal of constant amplitude and operating cycle, which is frequency-modulated by a comparatively low-frequency square-wave modulation signal. Due to the properties of the series-resonance chain L-C (above resonance the impedance increases at a higher frequency so that the lamp current decreases) the lamp current is modulated with the same waveform. This can be achieved using customary, dimming, fluorescence lamp control circuits employing control methods such as on-time control, frequency control or phase control, as well as by suitably programming the microcontrol unit mP for carrying out corresponding control methods of the HF source.

### 2. Supply voltage modulation (VSM).

In this case, the HF source generates a HF voltage at a constant frequency which is amplitude-modulated with a square-wave modulation signal by modulating the voltage of the DC bus. This requires an input stage PFC which can supply a variable voltage to the HF source, which variable voltage can be obtained by using a so-termed SEPIC or retrace converter.

### 3. Pulse width modulation (PWM).

In this case, the HF source supplies a HF signal having a constant frequency and amplitude but a variable operating cycle. By reducing the operating cycle, the effective value of the voltage to the lamp resonance chain L-C and hence the lamp current can be reduced. The operating cycle can be modulated with a square-wave modulation signal to obtain the square-wave modulated lamp current required to carry out the invention.

The microprocessing unit mP can have an internal or an external memory for storing a table of lamp voltage peak values associated with different lamp types, which peak values are calibrated for one or a number of square-wave modulation frequencies bmf at a given modulation depth of the lamp control current or a number of modulation depths. By comparing the peak voltage detected by the peak voltage detector PD at a given bmf and modulation depth, it is possible to identify the lamp type that can be connected, which data can be used to set parameters of the universal lamp ballast which are suitable for this lamp type.

It is noted that the above description regarding the manner of generating the square-wave lamp control current enables persons skilled in the art to suitably program the microcontrol unit mP for controlling the HF source in a desirable manner, the more so as, for example, for dimming a discharge lamp corresponding control algorithms are used already.

## Claims

1. A method of identifying the type of discharge lamp (La), **characterized in that** it comprises the steps of applying a square wave amplitude-modulated control current (Il) to a discharge lamp, detecting the peak value of the lamp voltage(Vl) at a rising edge of the envelope of the modulated control current, and comparing the detected peak value with previously recorded peak values for different lamp types, and assigning the detected peak value to a lamp type on the basis of said comparison.

2. A device for carrying out the method as claimed in claim 1, which comprises means for supplying a control current (Il) to a discharge lamp (La), is **characterized by** the presence of means for square wave amplitude-modulating the control current to the lamp, peak detection means (PD) for detecting the peak voltage across the lamp at a rising edge of the envelope of the square wave amplitude- modulated control current, recording means for recording peak voltages associated with lamp types and means for comparing the measured peak voltage with the recorded peak voltages and supplying a lamp type-indicating signal on the basis of said comparison.

3. A device as claimed in claim 2, wherein the means for supplying a control current to the lamp are formed by a source of a high-frequency square-wave voltage supplying, via a series-resonance chain, a corresponding control current (Il) to the lamp, (La) **characterized in that** means are present for square-wave frequency modulating said high-frequency square-wave voltage.

4. A device as claimed in claim 2, wherein the means for supplying a control current (Il) to the lamp (La) are formed by a source of a high-frequency square-wave voltage supplying, via a series- resonance chain, a corresponding control current to the lamp, **characterized in that** means are present for square-wave pulse width modulating said high-frequency square-wave voltage.

5. A device as claimed in claim 2, wherein the means for supplying a control current (Il) to the lamp (La) are formed by a source of a high-frequency square-wave voltage supplying, via a series-resonance chain, a corresponding control current to the lamp, and wherein said source of a high-frequency square-wave voltage is fed with a direct voltage from an AC/DC converter, **characterized in that** means are present for square- wave amplitude-modulating the direct voltage supplied to said source of a high-frequency square-wave voltage.

## Patentansprüche

1. Verfahren zum Identifizieren des Typs einer Entladungslampe (La), **dadurch gekennzeichnet, dass** es die Schritte des Anlegens eines rechteckförmig amplitudenmodulierten Steuerstroms (Il) an eine Entladungslampe, Detektieren des Spitzenwertes der Lampenspannung (V1) an einer ansteigenden Flanke der Umhüllenden des modulierten Steuerstroms und Vergleichen des detektierten Spitzenwertes mit zuvor aufgezeichneten Spitzenwerten für unterschiedliche Lampentypen sowie Zuweisen des detektierten Spitzenwertes an einen Lampentyp auf Basis des genannten Vergleichs umfasst.

2. Einrichtung zum Ausführen des Verfahrens nach Anspruch 1, die Mittel zum Zuführen eines Steuerstroms (Il) an eine Entladungslampe (La) umfasst, **gekennzeichnet durch** das Vorhandensein von Mitteln zum rechteckförmigen Amplitudenmodulieren des Steuerstroms zu der Lampe, Spitzendetektionsmitteln (PD) zum Detektieren der Spitzenspannung an der Lampe bei einer ansteigenden Flanke der Umhüllenden des rechteckförmig amplitudenmodulierten Steuerstroms, Aufzeichnungsmitteln zum Aufzeichnen von zu Lampentypen gehörenden Spitzenspannungen und Mitteln zum Vergleichen der gemessenen Spitzenspannung mit den aufgezeichneten Spitzenspannungen sowie Abgeben eines den Lampentyp angebenden Signals auf Basis des genannten Vergleichs.

3. Einrichtung nach Anspruch 2, bei der die Mittel zum Zuführen eines Steuerstroms an die Lampe durch eine Quelle einer hochfrequenten Rechteckspannung gebildet werden, die über einen Serienresonanzkreis der Lampe (La) einen entsprechenden Steuerstrom (Il) zuführt, **dadurch gekennzeichnet, dass** Mittel zum rechteckförmigen Frequenzmodulieren der genannten hochfrequenten Rechteckspannung vorhanden sind.

4. Einrichtung nach Anspruch 2, bei der die Mittel zum Zuführen eines Steuerstroms (Il) an die Lampe (La) durch eine Quelle einer hochfrequenten Rechteckspannung gebildet werden, die über einen Serienresonanzkreis der Lampe einen entsprechenden Steuerstrom zuführt, **dadurch gekennzeichnet, dass** Mittel zum rechteckförmigen Pulsweitenmodulieren der genannten hochfrequenten Rechteckspannung vorhanden sind.

5. Einrichtung nach Anspruch 2, bei der die Mittel zum Zuführen eines Steuerstroms (Il) an die Lampe (La) durch eine Quelle einer hochfrequenten Rechteckspannung gebildet werden, die über einen Serienresonanzkreis der Lampe einen entsprechenden Steuerstrom zuführt, und bei der die genannte Quelle einer hochfrequenten Rechteckspannung mit einer Gleichspannung aus einem Gleichrichter gespeist wird, **dadurch gekennzeichnet, dass** Mittel zum rechteckförmigen Amplitudenmodulieren der der genannten Quelle einer hochfrequenten Rechteckspannung zugeführten Gleichspannung vorhanden sind.

## Revendications

1. Procédé pour identifier le type de lampe à décharge (La), **caractérisé en ce qu'**il comprend les étapes consistant à appliquer un courant de commande modulé en amplitude d'onde carrée (Il) à une lampe à décharge, à détecter la valeur maximale de la tension de lampe (VI) à l'endroit d'un flanc ascendant de l'enveloppe du courant de commande modulé et à comparer la valeur maximale détectée à des valeurs maximales précédemment enregistrées pour des types différents de lampe et à assigner la valeur maximale détectée à un type de lampe sur la base de ladite comparaison.

2. Dispositif pour mettre en oeuvre le procédé selon la revendication 1, qui comprend des moyens pour fournir un courant de commande (Il) à une lampe à décharge (La), est **caractérisé par** la présence de moyens pour moduler en amplitude d'onde carrée le courant de commande à la lampe, des moyens de détection de tension de crête (PD) pour détecter la tension de crête présente aux bornes de la lampe à l'endroit d'un flanc ascendant de l'enveloppe du courant de commande modulé en amplitude d'onde carrée, des moyens d'enregistrement pour enregistrer des tensions de crête qui sont associées à des types de lampe pour comparer la tension de crête mesurée aux tensions de crête enregistrées et pour fournir un signal d'indication de type de lampe sur la base de ladite comparaison.

3. Dispositif selon la revendication 2, dans lequel les moyens pour fournir un courant de commande à la lampe sont formés par une source de tension d'onde carrée de haute fréquence fournissant, par le biais d'une chaîne série-résonance, un courant de commande correspondant (II) à la lampe (La), **caractérisé en ce que** des moyens sont présents pour moduler en fréquence d'onde carrée ladite tension d'onde carrée de haute fréquence.

4. Dispositif selon la revendication 2, dans lequel les moyens pour fournir un courant de commande (Il) à la lampe (La) sont formés par une source de tension d'onde carrée de haute fréquence fournissant, par le biais d'une chaîne série-résonance, un courant de commande correspondant à la lampe, **caractérisé en ce que** des moyens sont présents pour moduler en largeur d'impulsion d'onde carrée ladite tension d'onde carrée de haute fréquence.

5. Dispositif selon la revendication 2, dans lequel les moyens pour fournir un courant de commande (Il) à la lampe (La) sont formés par une source de tension d'onde carrée de haute fréquence fournissant, par le biais d'une chaîne série-résonance, un courant de commande correspondant à la lampe et dans lequel ladite source de tension d'onde carrée de haute fréquence est alimentée en une tension continue en provenance d'un convertisseur CA/CC, **caractérisé en ce que** des moyens sont présents pour moduler en amplitude d'onde carrée la tension continue qui est fournie à ladite source de tension d'onde carrée de haute fréquence.
